(19) Europäisches Patentamt
European Patent Office
Office européen des brevets

(11) **EP 3 068 815 B1**

(12) **FASCICULE DE BREVET EUROPEEN**

(45) Date de publication et mention
de la délivrance du brevet:
**08.08.2018 Bulletin 2018/32**

(21) Numéro de dépôt: **14814920.6**

(22) Date de dépôt: **12.11.2014**

(51) Int Cl.:
***C08F 285/00*** *(2006.01)*    ***C09D 151/00*** *(2006.01)*

(86) Numéro de dépôt international:
**PCT/FR2014/052879**

(87) Numéro de publication internationale:
**WO 2015/071591 (21.05.2015 Gazette 2015/20)**

(54) **DISPERSION AQUEUSE DE POLYMERE A BASE DE PARTICULES MULTISTRUCTUREES POUR REVETEMENTS AQUEUX MURAUX RESISTANT A LA SALISSURE ET A L'ABRASION HUMIDE**

WÄSSRIGE DISPERSION VON POLYMER AUS MULTISTRUKTURIERTEN PARTIKELN FÜR WÄSSRIGE WANDBESCHICHTUNGEN GEGEN SCHMUTZ UND NASSABREIBUNG

AQUEOUS DISPERSION OF POLYMER MADE FROM MULTISTRUCTURED PARTICLES FOR AQUEOUS WALL COATINGS RESISTANT TO DIRT AND WET ABRASION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2013 FR 1361219**

(43) Date de publication de la demande:
**21.09.2016 Bulletin 2016/38**

(73) Titulaire: **Arkema France
92700 Colombes (FR)**

(72) Inventeurs:
• **BETREMIEUX, Isabelle
F-60580 Coye la Foret (FR)**
• **BOONE, Alain
F-60140 Verderonne (FR)**
• **LOZE, Jean-Yves
F-27300 Saint Victor de Chretienville (FR)**

(74) Mandataire: **Killis, Andréas
ARKEMA France
Département Propriété Industrielle
420, rue d'Estienne d'Orves
92705 Colombes Cedex (FR)**

(56) Documents cités:
**EP-A1- 1 167 477     WO-A2-2008/028062**

• **DATABASE WPI Week 201159 Thomson Scientific, London, GB; AN 2011-L09041 XP002726760, & JP 2011 168770 A (NIPPON SHOKUBAI CO LTD) 1 septembre 2011 (2011-09-01)**

**Description**

La présente invention concerne des dispersions aqueuses de polymère avec des particules multi-structurées de structure et de composition spécifique pour revêtements aqueux muraux résistant à la fois à la salissure et à l'abrasion humide.

Les dispersions de l'invention permettent une parfaite formation du film lors de la coalescence avec un film homogène et ayant une cohésion élevée du fait de la structure contrôlée des particules formées et de leur parfaite reproductibilité et par ce fait la prédictibilité de la température minimale de filmification (TMF). Cet excellent contrôle permet en conséquence des performances contrôlées et reproductibles, en particulier en termes de résistance à la salissure et à l'abrasion humide.

La demande WO 2011/009560 décrit des dispersions aqueuses stables ayant des particules structurées biphasiques coeur/écorce, avec un coeur P1 dur de Tg1 de 60 à 120°C et une écorce P2 molle de Tg2 de -20 à 40°C et une TMF de 0 à 50°C avec P1 représentant de 15 à 60% sur P1 + P2 pour des applications dans les revêtements aqueux, en particulier autoréticulables. Malgré la très bonne aptitude à la filmification et le contrôle de ce processus avec une bonne reproductibilté de la filmification et des performances, ces dispersions nécessitent l'utilisation de monomères portant des fonctions réticulables en post-réticulation, soit par autoréticulation, soit par addition d'agents réticulants externes, pour atteindre les niveaux de performances demandés par le marché, en particulier :

- en termes de résistance à l'abrasion humide dans les peintures murales intérieures fortement chargées, c'est-à-dire CPV supérieure à la CPV critique (CPV : Concentration Pigmentaire Volumique) pour lesquelles le liant doit être capable d'interagir fortement avec les pigments et les charges, avec un bon mouillage desdits pigments et charges
- en termes de durabilité et de résistance à l'eau dans les peintures murales extérieures moyennement chargées (CPV proche ou inférieure à la CPV critique) non autoréticulables contrairement à l'état de l'art.

D'autres solutions existent pour ce type d'applications mais elles font appel à des particules non structurées de basse TMF (inférieure à 5°C). Si elles ne sont pas réticulables, comme expliqué ci-haut, la résistance à la salissure est mauvaise.

Pour remédier aux inconvénients de l'état de la technique, il est proposé, selon la présente invention, de modifier une dispersion structurée de l'état de la technique (WO 2011/009560) impliquant déjà une phase P1 coeur dur et une phase P2 écorce molle.

WO2008/028062 décrit des compositions de polymère latex multi séquencé comprenant un polymère de semence, un polymère de coeur et un polymère d'écorce, lequel latex convient pour des peintures à faible taux de VOC (<50 g/l) et ayant une bonne résistance au blocking, un temps ouvert amélioré et une résistance augmentée à l'eau (au ramollissement). Pour une bonne résistance au blocking le polymère de semence et du coeur comprennent des monomères qui forment des polymères ayant un caractère dur et une Tg plus élevée pendant que le polymère d'écorce comprend des monomères ayant un caractère plus mou et une Tg plus faible. Pour améliorer le temps ouvert le latex comprend un taux convenable de monomères hydrophiles nécessaires pour retenir l'eau. Pour améliorer la résistance à l'eau (ramollissement à l'eau) des monomères hydrophobes sont greffés sur des portions hydrophiles de l'écorce ou des couches de coeur.

US 2011/0218291 décrit un procédé spécifique pour la préparation des dispersions des particules de polymère coeur / écorce à haut taux de solides par polymérisation multi-étapes, et des compositions de moulage PMMA, .dans lesquelles, lesdites particules sont utilisées comme additifs modificateurs améliorant la résistance aux chocs des pièces moulées.

en rajoutant une seconde écorce phase P3 spécifique de masse moléculaire contrôlée et de Tg3 allant de Tg2 -5°C à Tg2 +5°C et de préférence Tg3 étant égale à Tg2 $\pm$ 2°C, avec P3 phase molle supplémentaire et de masse plus faible que P2 étant rajoutée en plus de l'écorce molle P2 (enveloppant P2) à un taux spécifique.

Ainsi, la solution de la présente invention P1/P2/P3 dur/mou/mou permet d'atteindre facilement les performances visées citées, c'est-à-dire une résistance élevée à la salissure et à l'abrasion humide, ceci sans l'utilisation de systèmes réticulables et sans perdre les performances qui sont inhérentes à la structure de départ (P1/P2) ainsi modifiée et en ayant une facilité de mise en oeuvre et une reproductibilité parfaite de la structure de la filmification et des performances. La présente invention cherche donc à mettre au point une dispersion stable, de TMF contrôlée, pour la formulation de revêtements aqueux présentant une bonne résistance à la salissure et à l'abrasion humide.

Un premier objet de la présente invention concerne une dispersion aqueuse de polymère avec des particules de polymère multi-structurées et en particulier possédant 3 phases (couches) spécifiques de polymère, P1, P2 et P3 avec P1 un coeur dur enveloppé par une première écorce molle P2, P2 étant enveloppée par une deuxième écorce molle P3 de Mn plus faible mesurée par chromatographie d'exclusion stérique (ou GPC) dans le THF avec étalonnage polystyrène, ne dépassant pas 150000, de préférence allant de 1000 à 150000.

Le deuxième objet de l'invention concerne un procédé spécifique de préparation de ladite dispersion avec des étapes spécifiques.

Ensuite, l'invention couvre une composition de dispersion aqueuse de polymère qui comprend au moins une dispersion aqueuse de polymère selon l'invention.

Fait également partie de l'invention une composition de revêtement qui comprend au moins une dispersion aqueuse de polymère et au moins une composition de dispersion aqueuse de polymère comme définies selon l'invention.

L'invention couvre également l'utilisation d'une dispersion telle que définie selon l'invention en tant que liant organique pour revêtements aqueux et en dernier un revêtement qui résulte de l'utilisation de ladite dispersion ou de ladite composition de dispersion.

Donc, le premier objet de l'invention concerne une dispersion aqueuse de polymère à base de particules de polymère multi-structurées (au moins 3 phases distinctes de polymère) avec ladite particule comprenant :

- une phase polymère comme coeur, à base d'un polymère P1 issu de la polymérisation en émulsion d'une composition de monomères M1, avec P1 ayant
- une température de transition vitreuse Tg1 (calculée selon Fox) allant de 60 à 120°C, de préférence de 60 à 100°C,
- une seconde phase polymère enveloppant ledit coeur, à base d'un polymère P2 issu de la polymérisation en émulsion d'une composition de monomères M2, avec P2 ayant une température de transition vitreuse Tg2 (calculée selon Fox) allant de -60 à 40°C, de préférence de -30 à 30°C,
- une troisième phase polymère externe (ou écorce) enveloppant ladite phase P2 à base d'un polymère P3 issu de la polymérisation en émulsion d'une composition de monomères M3, avec P3 ayant une température de transition vitreuse Tg3 calculée selon Fox et allant de Tg2 -5°C à Tg2 +5°C, de préférence Tg3 étant égale à Tg2 ($\pm$ 2°C) et une masse moléculaire moyenne en nombre Mn ne dépassant pas 150000, de préférence allant de 1000 à 150000, mesurée par Chromatographie d'exclusion stérique ou GPC dans le THF, avec étalonnage polystyrène,

avec les taux en poids par rapport au poids total de polymère P1 + P2 + P3 étant pour :

- P1 de 5 à 50%
- P2 de 40 à 85%, de préférence de 45 à 80%
- P3 de 5 à 25%, de préférence de 10 à 20%

et la somme desdits taux en poids (P1 + P2 + P3) étant égale à 100% et en ce que ladite composition M3 dont est issu P3 et éventuellement ladite composition M2 dont est issu P2 comprennent au moins un monomère éthyléniquement insaturé porteur en plus de son insaturation éthylénique d'au moins un groupement fonctionnel X sélectionné parmi : acétoacétoxy, alkoxysilane, carboxy/anhydride, hydroxy, amine, époxy (ou oxirane), phosphate, phosphonate, phosphinate, sulfate, sulfonate, amide, imidazole, carbonate cyclique, uréido et de préférence parmi : acétoacétoxy, carboxy/anhydride, hydroxy, amine, époxy (ou oxirane), phosphate, phosphonate, phosphinate, sulfate, sulfonate, amide, imidazole, carbonate cyclique ou uréido.

De préférence, les polymères des phases P1 et P2 ont des Mn bien supérieures à 150000, plus particulièrement proches ou supérieures à 1000000.

Plus particulièrement, P3 est moins hydrophobe que P2 et encore plus particulièrement P2 est plus hydrophobe que P1.

D'une manière générale, un monomère « hydrophobe » est un monomère ayant peu d'affinité avec l'eau ou qui est peu soluble dans l'eau. Une méthode d'estimation de cette hydrophobie est celle de mesure du coefficient de partage de la substance à évaluer, entre l'octanol et l'eau, avec l'hydrophobie exprimée en logarithme de ce coefficient de partage. La valeur d'hydrophobie logKow pour un monomère est une estimation calculée du logarithme du coefficient de partage (log P) entre l'octanol et l'eau par la méthode de contribution des atomes et des fragments structuraux de la molécule, en utilisant pour cette estimation le logiciel KowWin de SRC (Syracure Research Corporation). Cette méthodologie est décrite par W. M. Meylan et P.H. Howard en 1995 dans « Atom/fragment contribution method for estimating octanol-water partition coefficients » dans Pharm. Sci. 84:83-92. Le coefficient de partage P correspond au rapport de la concentration chimique dans la phase octanol par rapport à la concentration chimique dans la phase aqueuse dans un système avec deux phases en équilibre.

Concernant un copolymère, en particulier tel qu'un polymère défini selon l'invention, la valeur globale d'hydrophobie selon l'invention, basée sur le logarithme du coefficient de partage octanol/eau, est définie comme étant la valeur moyenne en poids sur l'ensemble des monomères composants dudit polymère et elle est en particulier estimée par la moyenne en poids sur l'ensemble de monomères composants, des valeurs logKow individuelles calculées par la méthode KowWin, comme décrite ci-haut et correspond donc, selon cette définition à :
valeur globale d'hydrophobie :

$$\text{valeur globale d'hydrophobie : } \Sigma_i[x_i*(\log Kow)_i]$$

avec,

> $\Sigma_i$ : sommation sur i monomères composants
> $x_i$ : fraction en poids du monomère i dans ledit copolymère,
> $(\log Kow)_i$ : valeur d'hydrophobie calculée par la méthode KowWin pour ledit monomère i,

avec Kow correspondant au coefficient calculé de partage octanol/eau et logKow étant le logarithme de ce coefficient.

La dispersion de l'invention est en particulier obtenue par polymérisation en émulsion de ladite composition M1, réalisée en présence de trois tensioactifs anioniques dont un tensioactif anionique dans une composition de monomères de semence M0 et deux tensioactifs différents dans la composition de monomères M'1, avec la composition globale issue de M0 et de M'1 correspondant à ladite composition M1 de monomères et ladite polymérisation en émulsion de ladite composition M2 est réalisée en présence d'au moins deux tensioactifs dont un tensioactif non ionique, de préférence choisi parmi les alcools gras alcoxylés et l'autre étant anionique et pouvant être identique ou différent par rapport à l'un des deux tensioactifs définis ci-haut pour M1, plus particulièrement identique ou différent de celui de la composition de semence M0.

Comme tensioactifs anioniques convenables pour être utilisés dans M0, M'1 et M2, on peut citer des tensioactifs porteurs d'un groupement sulfate, sulfonate, phosphate ou phosphonate ou phosphinate, en particulier parmi les suivants :

- sulfosuccinates d'alkyle en $C_8$-$C_{18}$, éventuellement alcoxylés (diesters d'acide sulfosuccinique avec alcools en $C_8$-$C_{18}$, éventuellement alcoxylés)
- sulfate, sulfonate, phosphate ou phosphonate ou phosphinate d'alkyle en $C_8$-$C_{18}$, de préférence $C_9$-$C_{14}$, éventuellement alcoxylés
- sulfate, sulfonate, phosphate ou phosphonate ou phosphinate d'alkyl aryle (aryle substitué alkyle) avec alkyl en $C_8$ à $C_{18}$, éventuellement alcoxylé.

Quand lesdits alkyles sont alcoxylés, l'unité alcoxy peut être l'éthoxy et/ou le propoxy, l'éthoxy étant l'unité alcoxy la plus préférée. Le nombre d'unités alcoxy peut aller de 2 à 30, de préférence de 2 à 10.

Plus particulièrement, ledit tensioactif anionique est sélectionné parmi le dodécylbenzènesulfonate, le lauryl sulfate de sodium, le lauryl sulfate de sodium éthoxylé, l'isotridécylsulfate de sodium éthoxylé, le lauryl phosphate d'ammonium éthoxylé ou les sulfosuccinates et plus préférentiellement parmi les sulfosuccinates. De préférence, au moins un desdits tensioactifs anioniques dans M1 et M2 porte au moins un groupement sulfosuccinate (ou est un sulfosuccinate).

Selon une option particulièrement préférée de la dispersion de l'invention, ladite composition M2 et par conséquent ledit polymère P2 issu de M2 comprend au moins un agent de transfert hydrosoluble. Encore plus particulièrement, ladite composition M3 et par conséquent ledit polymère P3 issu de M3 comprend au moins deux agents de transfert dont un agent de transfert hydrosoluble, c'est-à-dire soluble dans l'eau et un agent de transfert liposoluble, c'est-à-dire soluble en phase organique, c'est-à-dire dans la composition des monomères M3. Encore plus préférentiellement dans un tel cas, le rapport en poids d'agent de transfert hydrosoluble sur liposoluble pour l'ensemble de phases P2 et P3 (P2 + P3) est inférieur à 10 et de préférence il est inférieur à 5. De préférence, lesdits agents de transfert sont choisis parmi les mercaptans.

Comme agents de transfert hydrosolubles convenables, on peut citer des agents de transfert comprenant un groupement ionique ou ionisable avec un nombre faible d'atomes de carbone, par exemple d'au moins 4 atomes de carbone.

Comme agents de transfert liposolubles convenables, on peut citer les agents de transfert comprenant un nombre élevé d'atomes de carbone, par exemple d'au moins 6 atomes de carbone. Comme groupements ioniques ou ionisables, on peut citer des groupements $-CO_2H$ ou $-SO_3H$ ou leurs sels.

Selon une option particulière de la présente invention, ladite composition M3 dont est issu P3 et éventuellement ladite composition M2 dont est issu P2 comprennent au moins un monomère éthyléniquement insaturé porteur en plus de son insaturation éthylénique, d'au moins un groupement fonctionnel X sélectionné parmi : acétoacétoxy, alkoxysilane, carboxy/anhydride, hydroxy, amine, époxy (ou oxirane), phosphate, phosphonate, phosphinate, sulfate, sulfonate, amide, imidazole, carbonate cyclique, uréido, ces groupements fonctionnels ne constituant pas des sites de réticulation mais apportant par exemple une aptitude améliorée à la formulation, une affinité pour des pigments ou des charges et une adhésion améliorée sur substrats difficiles. Plus préférentiellement, lesdits groupements fonctionnels X sont sélectionnés parmi :

Quand lesdits alkyles sont alcoxylés, l'unité alcoxy peut être l'éthoxy et/ou le propoxy, l'éthoxy étant l'unité alcoxy la plus préférée. Le nombre d'unités alcoxy peut aller de 2 à 30, de préférence de 2 à 10.

Plus particulièrement, ledit tensioactif anionique est sélectionné parmi le dodécylbenzènesulfonate, le lauryl sulfate de sodium, le lauryl sulfate de sodium éthoxylé, l'isotridécylsulfate de sodium éthoxylé, le lauryl phosphate d'ammonium éthoxylé ou les sulfosuccinates et plus préférentiellement parmi les sulfosuccinates. De préférence, au moins un desdits tensioactifs anioniques dans M1 et M2 porte au moins un groupement sulfosuccinate (ou est un sulfosuccinate).

Selon une option particulièrement préférée de la dispersion de l'invention, ladite composition M2 et par conséquent ledit polymère P2 issu de M2 comprend au moins un agent de transfert hydrosoluble. Encore plus particulièrement, ladite composition M3 et par conséquent ledit polymère P3 issu de M3 comprend au moins deux agents de transfert dont un agent de transfert hydrosoluble, c'est-à-dire soluble dans l'eau et un agent de transfert liposoluble, c'est-à-dire soluble en phase organique, c'est-à-dire dans la composition des monomères M3. Encore plus préférentiellement dans un tel cas, le rapport en poids d'agent de transfert hydrosoluble sur liposoluble pour l'ensemble de phases P2 et P3 (P2 + P3) est inférieur à 10 et de préférence il est inférieur à 5. De préférence, lesdits agents de transfert sont choisis parmi les mercaptans.

Comme agents de transfert hydrosolubles convenables, on peut citer des agents de transfert comprenant un groupement ionique ou ionisable avec un nombre faible d'atomes de carbone, par exemple d'au moins 4 atomes de carbone.

Comme agents de transfert liposolubles convenables, on peut citer les agents de transfert comprenant un nombre élevé d'atomes de carbone, par exemple d'au moins 6 atomes de carbone. Comme groupements ioniques ou ionisables, on peut citer des groupements $-CO_2H$ ou $-SO_3H$ ou leurs sels.

Lesdits groupements fonctionnels X ne constituent pas des sites de réticulation mais apportent par exemple une aptitude améliorée à la formulation, une affinité pour des pigments ou des charges et une adhésion améliorée sur substrats difficiles. Plus préférentiellement, lesdits groupements fonctionnels X sont sélectionnés parmi : peut varier de 0,002 à 0,5, de préférence 0,005 à 0,5, plus préférentiellement de 0,01 à 0,5 et encore plus préférentiellement de 0,02 à 0,5.

Selon une possibilité préférée, lesdits polymères P1, P2 et P3 sont issus respectivement desdites compositions de monomères M1, M2 et M3, constituées exclusivement de monomères (méth)acryliques ou de mélanges de monomères (méth)acryliques avec au moins un monomère vinyl aromatique, le styrène étant le monomère vinyl aromatique préféré.

Selon une autre possibilité particulière, ledit polymère P1 est issu d'une composition de monomères M1, comprenant au moins un monomère en tant qu'agent réticulant interne. Cela signifie que ledit agent réticulant a au moins deux insaturations éthyléniques polymérisables lors de la polymérisation en émulsion de ladite composition M1 pour conduire à un polymère P1 réticulé. Comme exemple convenable d'agent réticulant, on peut citer des monomères multifonctionnels de fonctionnalité en groupements acryliques, allyliques ou vinyliques d'au moins 2. Comme exemples convenables d'agents réticulants internes acryliques, on peut citer l'éthylène glycol di(méth)acrylate, le propylène glycol di(méth)acrylate, le butane diol di(méth)acrylate, l'hexane diol di(méth)acrylate, le triméthylol propane tri(méth)acrylate. Le terme « acryliques » signifie ici à la fois acryliques et méthacryliques et le terme « acrylates » signifie à la fois acrylates et méthacrylates. Deux groupements différents peuvent être également présents dans un agent mixte. Comme exemple d'agent réticulant mixte, on peut citer le méthacrylate d'allyle. Comme agent réticulant interne vinylique convenable, on peut citer un monomère vinylique portant au moins deux insaturations vinyliques, comme par exemple les di- et tri- vinyl benzènes.

Le deuxième objet de l'invention concerne un procédé de préparation d'une dispersion telle que définie ci-haut selon l'une de variantes de l'invention, lequel procédé comprend les étapes suivantes de polymérisation en émulsion :

i) une étape d'ensemencement comprenant une prépolymérisation en émulsion d'une composition de monomères de semence M0, avec les particules de semence ayant une taille inférieure ou égale à 30 nm et représentant un taux en poids allant de 2 à 25% et de préférence de 5 à 20% du poids de ladite phase polymère P1

ii) une étape de polymérisation en émulsion d'une composition de monomères M'1 donnant un polymère P'1, constituant ainsi avec le polymère de semence P0 obtenu à l'étape i) ladite phase polymère P1 dudit coeur de particule, ladite composition de monomères M'1 étant identique ou différente de ladite composition de semence M0 (et si identique à M0, elle correspond à celle desdits monomères M1) et leur composition globale moyenne en poids (M0 + M'1) correspondant à celle desdits monomères M1, en option le produit de cette étape ii) (dispersion) pouvant être stocké et utilisé de manière différée dans le temps, comme matière première pour l'étape iii) suivante, c'est-à-dire pour l'addition et la polymérisation de ladite composition de monomères M2

iii) une étape de polymérisation en émulsion d'une composition de monomères M2 donnant lieu à ladite phase polymère P2, ladite étape iii) comprenant au départ un ensemencement, éventuellement, en présence d'un agent de transfert hydrosoluble

iv) une étape de polymérisation en émulsion d'une composition M3 de monomères donnant lieu à ladite phase polymère P3, éventuellement en présence de deux agents de transfert un hydrosoluble et l'autre liposoluble, de préférence choisi parmi les mercaptans, afin d'obtenir ledit polymère P3 en couche externe.

La composition globale moyenne en poids du mélange M0 + M'1 correspond à la composition desdits monomères M1 dont est issue ladite phase polymère P1.

En option, le produit de cette étape ii) (dispersion) peut être stocké et utilisé de manière différée dans le temps, comme matière première pour l'étape iii) suivante, c'est-à-dire pour l'addition et polymérisation de ladite composition de monomères M2.

Selon une première variante dudit procédé :

- l'étape d'ensemencement i) est réalisée en présence de 0,01 à 0,5%, de préférence de 0,05 à 0,2% en poids d'un tensioactif anionique (le produit tensioactif étant considéré à sec, c'est-à-dire à 100% de tensioactif) par rapport au poids total de P1 + P2 + P3
- l'étape de polymérisation en émulsion ii) de la composition de monomères M'1 est réalisée en présence de 0,1 à 3%, de préférence de 0,1 à 1,5% en poids par rapport au poids total de P1 + P2 + P3, d'un premier tensioactif anionique, qui est identique ou différent de celui de la semence M0, c'est-à-dire celui utilisé à l'étape d'ensemencement i), mais s'il est identique cela signifie qu'il est rajouté à ladite étape ii) et d'un deuxième tensioactif anionique différent du premier de cette étape ii), avec le taux en poids de ces deux tensioactifs anioniques de phase P1 étant de 0,1 à 3%, de préférence de 0,1 à 1,5% par rapport au poids total de P1 + P2 + P3
- l'étape de polymérisation en émulsion iii) de la composition de monomères M2 est réalisée en présence de 0,1 à 3%, de préférence de 0,2 à 2,5% en poids par rapport au poids total de P1 + P2 + P3, d'au moins deux tensioactifs a) et b) avec a) étant un premier tensioactif non ionique choisi parmi les alcools gras alcoxylés, plus préférentiellement alcools gras en $C_{12}$ à $C_{16}$ alcoxylés, encore plus préférentiellement avec comme unités alcoxy des unités éthoxy et/ou propoxy, en particulier des unités éthoxy et plus particulièrement avec le nombre desdites unités alcoxy étant de 3 à 50 et encore plus particulièrement de 5 à 40 unités éthoxy et b) étant un tensioactif anionique pouvant être identique ou différent de ceux de l'étape ii), avec ladite étape iii) comprenant au départ un ensemencement et en option en présence d'au moins un agent de transfert hydrosoluble
- l'étape de polymérisation iv) de ladite composition M3 est réalisée en présence ou absence de tensioactifs et si réalisée en présence de tensioactifs dans les mêmes conditions que celles de l'étape iii) et en option en présence d'au moins deux agents de transfert dont un hydrosoluble et un liposoluble.

Plus particulièrement, concernant ledit procédé selon l'invention :

- les étapes i) et ii) sont réalisées à une température de 75 à 90°C
- l'étape de polymérisation iii) de ladite composition de monomères M2 comme l'étape de polymérisation iv) de ladite composition de monomères M3 est réalisée à une température inférieure à Tg1, lorsque ledit procédé est mis en oeuvre à pression atmosphérique.

Plus préférentiellement, concernant ledit procédé, l'étape ii) de polymérisation en émulsion de la composition globale de monomères M1 donnant ledit polymère P1 et l'étape iii) de polymérisation en émulsion de ladite composition de monomères M2 donnant ledit polymère P2 sont poursuivies à un taux de conversion d'au moins 95%, plus préférentiellement d'au moins 98% et encore plus préférentiellement de 100%, avant l'addition de ladite composition de monomères M3.

Le troisième objet de l'invention concerne une composition de dispersion aqueuse de polymère, laquelle composition comprend au moins une dispersion aqueuse telle que définie selon l'une des variantes définies ci-haut selon l'invention ou obtenue par le procédé tel que défini selon l'invention.

Selon un cas particulier et préféré dans ladite composition de dispersion, ladite dispersion est une dispersion telle que définie ci-haut comportant dans P3 et éventuellement dans P2, des monomères fonctionnalisés X.

Selon une variante particulièrement préférée, ladite composition de dispersion aqueuse de polymère comprend en plus de ladite dispersion selon l'invention au moins une autre dispersion aqueuse de polymère, de préférence avec ladite autre dispersion étant une dispersion de résines ou de polymères choisie parmi : dispersion de polyesters saturés et/ou insaturés, de préférence à base de polyesters insaturés et plus préférentiellement dispersion de résines alkydes modifiées ou non modifiées, dispersion (émulsion) de copolymères acryliques, y compris purement acryliques et styrène-acrylique, dispersion de copolymères vinyliques, dispersion d'oligomères acryliques acrylés, dispersion de polyuréthanes y compris polyuréthanes insaturés, en particulier acrylés, dispersion de résines d'hydrocarbures ou dispersion de résines de colophane, y compris esters de colophane ou dispersion de résines modifiées à la colophane.

Parmi les dispersions d'alkydes sont inclues les dispersions d'alkydes modifiées, en particulier modifiées par monomères acryliques ou par des monomères vinyl aromatiques comme le styrène ou par des motifs uréthanes ou par des motifs amides ou modifiées par la colophane et en particulier courte en huile. Plus particulièrement, ladite alkyde est biosourcée par rapport aux matières premières utilisées. Une telle résine biosourcée est en particulier décrite dans WO 2012/042153.

Ladite composition de dispersions aqueuses de l'invention peut être réalisée par mélange desdites dispersions effectué à la température de synthèse de la dispersion aqueuse selon l'invention ou à une température inférieure.

Selon une autre option, ladite composition de dispersion de polymère comprend une dispersion selon l'invention comme définie ci-haut avec P3 et éventuellement P2 issus de compositions de monomères respectives, comprenant pour P3 et éventuellement pour P2, des monomères fonctionnalisés avec X parmi acétoacétoxy, alkoxysilane, carboxy/anhydride, hydroxy, amine, époxy (ou oxirane), phosphate, phosphonate, phosphinate, sulfate, sulfonate, amide, imidazole, carbonate cyclique et de préférence parmi acétoacétoxy, carboxy/anhydride, hydroxy, amine, époxy (ou oxirane), phosphate, phosphonate, phosphinate, sulfate, sulfonate, amide, imidazole, carbonate cyclique.

Un autre objet de l'invention concerne une composition de revêtement, en particulier composition aqueuse de revêtement, laquelle composition comprend au moins une dispersion aqueuse telle que définie selon l'invention comme décrit ci-haut ou obtenue par un procédé tel que défini selon l'invention ou ladite composition de revêtement comprend au moins une composition de dispersion telle que définie selon l'invention ci-avant.

Plus particulièrement, ladite composition de revêtement ne comprend pas d'agent de coalescence. Ceci signifie qu'il n'y a pas besoin d'un tel agent pour la coalescence et la filmification compte tenu de la structure spécifique de la particule liée au procédé spécifique utilisé de préparation.

Un autre objet couvert par la présente invention est l'utilisation d'une dispersion aqueuse selon l'invention ou obtenue par un procédé selon l'invention, en tant que liant organique pour revêtements aqueux, c'est-à-dire dans des compositions aqueuses de revêtement.

Plus particulièrement, cette utilisation peut concerner des revêtements aqueux.

Ladite utilisation concerne de préférence des revêtements industriels, en particulier des revêtements de protection et/ou revêtements décoratifs, plus particulièrement choisis parmi : peintures, vernis, lasures, primaires, encres, adhésifs et/ou revêtements de finition (top coats), d'étanchéité, de traitement de verre, de traitement de fibres, en particulier de textile, de traitement de tissus tissés ou non tissés.

Selon une option particulière, ladite utilisation concerne des revêtements de protection, choisis parmi les revêtements de protection mécanique et/ou chimique de substrats, en particulier parmi les substrats : métal, béton, fibrociment, plâtre, bois, carton, plastique, composite, verre, fibres (creuses ou non), textile, tissus tissés ou non tissés (synthétiques ou cellulosiques), cuir.

Plus particulièrement et de manière préférée, ladite dispersion de polymère est utilisée pour revêtements aqueux, résistant à la salissure et/ou à l'abrasion humide.

Finalement, l'invention couvre également un revêtement en particulier non réticulé en tant que produit fini, résultant de l'utilisation d'au moins une dispersion telle que décrite ci-haut selon l'invention ou obtenue par un procédé de l'invention tel que décrit ci-haut ou de l'utilisation d'une composition de dispersion telle que décrite selon l'invention ci-haut. Plus particulièrement, ledit revêtement n'est pas réticulé.

Les exemples exposés ci-après sont présentés à titre d'illustration de l'invention et de ses performances et en aucun cas ils ne limitent l'invention.

A) Description de matières premières, de la préparation de la dispersion

1) Matières premières de préparation des dispersions (voir tableau 1 ci-dessous)

Tableau 1 : Matières premières utilisées dans la synthèse des dispersions

| Constituants | Fonctions | Natures chimiques | Fournisseurs |
|---|---|---|---|
| Aerosol® A102 | Tensio-actif | Sulfosuccinate d'alcool gras éthoxylé, sel de sodium ($C_{10}$-$C_{12}$) solution à 30% dans l'eau | Cytec |
| Disponil® FES 32 | Tensio-actif | Sulfate d'alcool gras polyglycol éther, sel de sodium solution à 31% dans l'eau | Cognis |
| Emulan®TO 4070 | Tensio-actif | Alcool gras éthoxylé secondaire avec 40 OE, 70% | BASF |
| SR 238 | Réticulant | Hexane diol diacrylate | Sartomer |
| ABu | Monomère | Acrylate de butyle | Arkema |

(suite)

| Constituants | Fonctions | Natures chimiques | Fournisseurs |
|---|---|---|---|
| MAM | Monomère | Méthacrylate de méthyle | Arkema |
| AA | Monomère | Acide acrylique | Arkema |
| AMA | Monomère | Acide méthacrylique | Arkema |
| nDDM | Mercaptan | N-dodécylmercaptan | Acros |
| MAA | Mercaptan | Acide mercaptoacétique | Acros |
| $Na_2S_2O_8$ | Peroxyde | Persulfate de sodium | Aldrich |
| TBHP | Peroxyde | Ter-butyle hydroperoxyde à 70% | Aldrich |
| SFS | Réducteur | Formaldehyde sulfoxylate de sodium | Bruggeman |
| $NH_3$ | Neutralisation | Hydroxyde d'ammonium | Prolabo |
| Acticide MBS | Biocide | Solution aqueuse de méthylisothiazoline (MIT) et de benzisothiazolinone (BIT) (2,5% MIT / 2,5% BIT) | Thor |

Les Tg des phases P1, P2 et P3 sont calculées selon la relation de Fox à partir des valeurs de Tg des homopolymères, comme indiquées ci-dessous :

| Monomère | Abréviation | Tg (°C) |
|---|---|---|
| Acide acrylique | AA | 106 |
| Acide méthacrylique | AMA | 228 |
| Acrylate de butyle | ABu | -54 |
| Méthacrylate de méthyle | MAM | 105 |

Dans le cas de l'essai décrit ci-dessous selon l'invention, les Tg calculées, les % en poids et les Mn des différentes phases sont indiquées dans le tableau 2 ci-dessous :

Tableau 2 : Tg calculées, % poids et Mn des phases P1, P2 et P3

| | P1 | P2 | P3 |
|---|---|---|---|
| Tg Fox en °C | 63 | -8 | -6 |
| % poids vs (P1 + P2 + P3) | 40,0 | 47,8 | 12,2 |
| Mn | $\geq 1.10^6$ | $\geq 1.10^6$ | $1.10^3 - 1,5*10^5$ |

2) Mode opératoire de préparation des dispersions étudiées ici

Le mode opératoire présenté ci-dessous concerne la synthèse de la dispersion de l'exemple décrit selon l'invention.

2.1) Matériel utilisé

Un réacteur de 10 l (contenance interne) en acier est utilisé, équipé d'une double enveloppe, muni d'une agitation efficace (vortex), d'un réfrigérant à triple flux, d'un contrôle et d'une régulation de la température matière. Le réacteur comporte le nombre de raccords d'introductions nécessaires à l'introduction séparée des différents composants, ainsi qu'une introduction dédiée à l'inertage à l'azote de l'ensemble. L'étanchéité est vérifiée avant chaque synthèse. L'installation est équipée d'un système permettant de contrôler les débits d'introduction des composants. La polymérisation est de type semi-batch à pression atmosphérique.

2.2) Préparation de la charge initiale en pied de cuve

120 g de Disponil® FES 32 sont solubilisés dans 3116 g d'eau déminéralisée en pied de cuve. La température du pied de cuve est portée à 80°C.

2.3) Préparation de la semence M0 pour P0

Mélanger 113,4 g de MAM + 25,2 g d'ABu.

2.4) Préparation de la préémulsion M'1 pour P'1

40 g d'Aerosol® A102, 66,67 g de Disponil® FES 32 sont dispersés dans 325,33 g d'eau déminéralisée sous bonne agitation.
Sont ajoutés tour à tour et sous bonne agitation :

- 1146,6 g de MAM
- 254,8 g d'ABu
- 40 g d'HDDA
- 20 g d'AMA

La préémulsion M'1 ainsi formée est blanche et stable et elle sera maintenue sous légère agitation.
M'1 sera utilisée pour la synthèse du coeur de la particule P1, composé de P0 et P'1 (P1 = P0 + P'1).

2.5) Préparation de la préémulsion M2 pour P2

31,87 g d'Aerosol® A102, 59,75 g d'Emulan® TO 4070 sont dispersés dans 371,7 g d'eau sous bonne agitation.
Sont ajoutés tour à tour et sous agitation :

- 669,2 g de MAM
- 1147,2 g d'ABu

On obtient une préémulsion blanche et stable.
6,32% de cette préémulsion, soit 144 g seront prélevés et utilisés pour réaliser un ensemencement avant la coulée du reste pour P2.
Puis, sont ajoutés dans la préémulsion, toujours sous bonne agitation :

- 87,64 g d'AMA
- 6 g de MAA
- 54 g d'eau de rinçage

Cette préémulsion blanche et stable servira à la synthèse de la première écorce de la particule P2.

2.6) Préparation de la préémulsion M3 pour P3

8,13 g d'Aerosol® A102, 15,25 g d'Emulan® TO 4070 sont dispersés dans 113,26 g d'eau sous bonne agitation.
Sont ajoutés tour à tour et sous agitation :

- 170,80 g de MAM
- 292,80 g d'ABu
- 22,36 g d'AMA
- 10 g d'AA
- 2 g de MAA
- 18 g d'eau de rinçage
- 0,8 g de nDDM

Cette préémulsion blanche et stable servira à la synthèse de la seconde écorce de la particule P3.

2.7) Procédé de polymérisation

i) Ensemencement P0

Le pied de cuve avec la charge initiale étant stable à 80°C sont introduits pour l'ensemencement P0, le mélange de 113,4 g de MAM et 25,2 g d'ABu.

Une fois la température stabilisée, 100% de la solution de persulfate de sodium sont ajoutés, soit 14 g dissous dans 266 g d'eau. Le maximum d'exothermie marque la fin de cette étape, la taille de particule est d'environ 30 nm et la conversion est supérieure à 70%.

ii) Synthèse du coeur P1

L'introduction de la préémulsion P'1 dure 120 minutes à une température de polymérisation de 80°C.

La température est maintenue pendant 60 minutes supplémentaires à 80°C. A la fin de cette cuisson thermique, le milieu réactionnel est refroidi à 65°C. La conversion est alors proche de 100%.

iii) Synthèse de l'écorce P2

A 65°C, l'ensemencement constitué de 144 g de la fraction de M2 (telle que décrite au point 2.5)) est introduit dans le réacteur. On mélange pendant au moins 5 min.

Début des introductions séparées :

- La totalité (le reste) de la préémulsion M2 (sans l'ensemencement déjà ajouté)
- 100% d'une solution de TBHP, soit 4,28 g dans 18,8 g d'eau
- 100% d'une solution de SFS, soit 3 g dans 72 g d'eau

Pendant les coulées qui durent 120 minutes, la température du milieu est maintenue à 65°C. Cette étape est suivie d'une post-cuisson d'une durée de 10 minutes à 65°C. La conversion est alors proche de 100%.

iv) Synthèse de l'écorce P3

A 65°C, introductions :

- 100% de la préémulsion P3 en 30 min
- 100% d'une solution de TBHP, soit 1,43 g dans 6,3 g d'eau en 45 min
- 100% d'une solution de SFS, soit 1 g dans 24 g d'eau en 45 min

Cette étape est suivie d'une post-cuisson d'une durée de 30 minutes à 65°C. La conversion est alors proche de 100%.

v) Additions finales

Après refroidissement vers 30-35°C, la dispersion est d'abord neutralisée sous bonne agitation (vortex) par addition d'une solution d'ammoniaque à 28%, environ 4,5 g par kg de latex, ajoutés en 30 min environ. Le pH sera compris entre 8 et 9.

Après 60 min d'agitation, il est ajouté un système biocide. Il est ensuite filtré sur toile 100 $\mu$m et caractérisé :

- Le pH est de 8
- L'extrait sec est de 46%
- La viscosité est de 70 mPa.s
- La taille de particule finale est d'environ 85 nm
- La TMF mesurée est de 9°C.

3) Méthodes et tests utilisés

a) pH

Le pH des dispersions aqueuses est mesuré selon la norme ISO 976.

b) Extrait sec

L'extrait sec des dispersions aqueuses est mesuré selon la norme ISO 3251.

c) Viscosité

La viscosité des dispersions aqueuses est mesurée selon la norme ISO 2555.

d) Taille des particules

La taille des particules est mesurée par Spectroscopie de Corrélation de Photons (PCS), à l'aide d'un appareillage N4+ de Beckman Coulter. L'échantillon est dilué (3 à 5 gouttes d'émulsion dans 50 ml d'eau) dans une cuve en polystyrène à l'aide d'eau désionisée sur un filtre en acétate de cellulose de 0,22 $\mu$m. La taille des particules est mesurée à une température de 25°C, sous un angle de mesure de 90° et à une longueur d'onde du laser de 633 nm.

e) Température minimale de formation (TMF) de film

La TMF des dispersions aqueuses est mesurée selon la norme ISO 2115.

## Revendications

**1.** Dispersion aqueuse de polymère à base de particules de polymère multi-structurées (au moins 3 phases distinctes de polymère), **caractérisée en ce que** ladite particule comprend :

- une phase polymère comme coeur, à base d'un polymère P1 issu de la polymérisation en émulsion d'une composition de monomères M1, avec P1 ayant une température de transition vitreuse Tg1 calculée selon Fox allant de 60 à 120°C, de préférence de 60 à 100°C,
- une seconde phase polymère enveloppant ledit coeur, à base d'un polymère P2 issu de la polymérisation en émulsion d'une composition de monomères M2, avec P2 ayant une température de transition vitreuse Tg2 calculée selon Fox, allant de -60 à 40°C, de préférence de -30 à 30°C,
- une troisième phase polymère externe (ou écorce) enveloppant ladite phase P2, à base d'un polymère P3 issu de la polymérisation en émulsion d'une composition de monomères M3, avec P3 ayant une température de transition vitreuse Tg3 calculée selon Fox, allant de Tg2 -5°C à Tg2 +5°C et de préférence Tg3 étant égale à Tg2 $\pm$ 2°C et une masse moléculaire moyenne en nombre Mn mesurée par chromatographie à exclusion stérique avec étalonnage polystyrène ne dépassant pas 150000, de préférence allant de 1000 à 150000,

avec les taux en poids par rapport au poids total de polymère P1 + P2 + P3 étant pour :

- P1 de 5 à 50%
- P2 de 40 à 85%, de préférence de 45 à 80%
- P3 de 5 à 25%, de préférence de 10 à 20%

et la somme desdits taux en poids (P1 + P2 + P3) étant égale à 100% et
**en ce que** ladite composition M3 dont est issu P3 et éventuellement ladite composition M2 dont est issu P2 comprennent au moins un monomère éthyléniquement insaturé porteur en plus de son insaturation éthylénique d'au moins un groupement fonctionnel X sélectionné parmi : acétoacétoxy, alkoxysilane, carboxy/anhydride, hydroxy, amine, époxy (ou oxirane), phosphate, phosphonate, phosphinate, sulfate, sulfonate, amide, imidazole, carbonate cyclique, uréido et de préférence parmi : acétoacétoxy, carboxy/anhydride, hydroxy, amine, époxy (ou oxirane), phosphate, phosphonate, phosphinate, sulfate, sulfonate, amide, imidazole, carbonate cyclique ou uréido.

**2.** Dispersion selon la revendication 1, **caractérisée en ce que** ladite polymérisation en émulsion de ladite composition M1 est réalisée en présence de trois tensioactifs anioniques dont un tensioactif anionique dans une composition de monomères de semence M0 et deux tensioactifs différents dans une composition de monomères M'1 avec la composition globale issue de M0 et de M'1, correspondant à ladite composition M1 de monomères et **en ce que** ladite polymérisation en émulsion de ladite composition M2 est réalisée en présence d'au moins deux tensioactifs dont un non ionique, de préférence choisi parmi les alcools gras alcoxylés et l'autre étant anionique et pouvant être identique ou différent par rapport à l'un des deux tensioactifs définis ci-haut pour M1 et **en ce qu'**au moins un desdits tensioactifs anioniques dans M1 et M2 porte au moins un groupement sulfosuccinate.

3. Dispersion selon la revendication 1 ou 2, **caractérisée en ce que** ladite composition M2 et par conséquent ledit polymère P2 issu de M2 comprend au moins un agent de transfert hydrosoluble, **en ce que** ladite composition M3 et par conséquent ledit polymère P3 issu de M3 comprend au moins deux agents de transfert dont un hydrosoluble et un liposoluble et le rapport en poids d'agent de transfert hydrosoluble sur liposoluble pour l'ensemble des phases P2 et P3 (P2 + P3) est inférieur à 10 et de préférence inférieur à 5.

4. Dispersion selon la revendication 3, **caractérisée en ce que** l'indice de groupements X exprimé en mmoles/g de polymère (polymère : P1 + P2 + P3) varie de 0,002 à 0,5, de préférence de 0,005 à 0,5, plus préférentiellement de 0,1 à 0,5 et encore plus préférentiellement de 0,02 à 0,5.

5. Dispersion selon l'une des revendications 1 à 4, **caractérisée en ce que** lesdits polymères P1, P2 et P3 sont issus respectivement desdites compositions de monomères M1, M2 et M3, constituées exclusivement de monomères (méth)acryliques ou des mélanges de monomères (méth)acryliques avec au moins un monomère vinyl aromatique, le styrène étant le monomère vinyl aromatique préféré et que ledit polymère P1 est issu d'une composition de monomères M1 comprenant au moins un monomère en tant qu'agent réticulant interne.

6. Procédé de préparation d'une dispersion telle que définie selon l'une des revendications 1 à 5, **caractérisé en ce que** ledit procédé comprend les étapes suivantes de polymérisation en émulsion :

   i) une étape d'ensemencement comprenant une prépolymérisation en émulsion d'une composition de monomères de semence M0, avec les particules de semence ayant une taille inférieure ou égale à 30 nm et représentant un taux en poids allant de 2 à 25% et de préférence de 5 à 20% du poids de ladite phase polymère P1
   ii) une étape de polymérisation en émulsion d'une composition de monomères M'1 donnant un polymère P'1, constituant ainsi avec le polymère de semence P0 obtenu à l'étape i), ladite phase polymère P1 dudit coeur de particule, ladite composition de monomères M'1 étant identique ou différente de ladite composition de semence M0 et leur composition globale moyenne en poids (M0 + M'1) correspondant à celle desdits monomères M1 et en option le produit de cette étape ii) (dispersion) pouvant être stocké et utilisé de manière différée dans le temps comme matière première pour l'étape iii) suivante
   iii) une étape de polymérisation en émulsion d'une composition de monomères M2 donnant lieu à ladite phase polymère P2, avec ladite étape iii) comprenant au départ un ensemencement et éventuellement en présence d'un agent de transfert hydrosoluble,
   iv) une étape de polymérisation d'une composition M3 de monomères donnant lieu à ladite phase polymère P3, afin d'obtenir ledit polymère P3 en couche externe, éventuellement en présence de deux agents de transfert, de préférence parmi les mercaptans, l'un hydrosoluble et l'autre liposoluble.

7. Procédé selon la revendication 6, **caractérisé en ce que** :

   - l'étape d'ensemencement i) est réalisée en présence de 0,01 à 0,5%, de préférence de 0,05 à 0,2% en poids dudit tensioactif anionique (produit TA sec à 100%) par rapport au poids total de P1 + P2 + P3
   - l'étape de polymérisation ii) de la composition de monomères M'1 est réalisée en présence de 0,1 à 3%, de préférence de 0,1 à 1,5% en poids par rapport au poids total de P1 + P2 + P3, d'un premier tensioactif anionique qui est identique ou différent de celui de la semence M0 et d'un deuxième tensioactif anionique différent du premier de cette étape ii), avec le taux en poids de ces deux tensioactifs anioniques de phase P1 étant de 0,1 à 3%, de préférence de 0,1 à 1,5% par rapport au poids total de P1 + P2 + P3
   - l'étape de polymérisation iii) de la composition de monomères M2 est réalisée en présence de 0,1 à 3%, de préférence de 0,2 à 2,5% en poids par rapport au poids total de P1 + P2 + P3, d'au moins deux tensioactifs a) et b) avec a) étant un premier tensioactif non ionique choisi parmi les alcools gras alcoxylés, de préférence choisi parmi les alcools gras alcoxylés, plus préférentiellement alcools gras en $C_{12}$ à $C_{16}$ alcoxylés, encore plus préférentiellement avec comme unités alcoxy des unités éthoxy et/ou propoxy, en particulier des unités éthoxy et plus particulièrement avec le nombre desdites unités alcoxy étant de 3 à 50 et encore plus particulièrement de 5 à 40 unités éthoxy et b) étant un tensioactif anionique pouvant être identique ou différent de ceux de l'étape ii), avec ladite étape iii) comprenant au départ un ensemencement et en option en présence d'au moins un agent de transfert hydrosoluble,
   - l'étape de polymérisation iv) de ladite composition M3 est réalisée en présence ou absence de tensioactifs et si réalisée en présence de tensioactifs, dans ce cas dans les mêmes conditions que celles de l'étape iii) et en option en présence d'au moins deux agents de transfert dont un hydrosoluble et un liposoluble et **en ce que** :

- les étapes i) et ii) sont réalisées à une température de 75 à 90°C
- l'étape de polymérisation iii) de ladite composition de monomères M2 comme l'étape de polymérisation iv) de ladite composition de monomères M3 est réalisée à une température inférieure à Tg1 lorsque ledit procédé est mis en oeuvre à pression atmosphérique.

8. Procédé selon la revendication 6 ou 7, **caractérisé en ce que** l'étape ii) de polymérisation en émulsion de la composition globale M1 donnant le polymère P1 et l'étape iii) de polymérisation en émulsion de ladite composition M2 donnant le polymère P2 sont poursuivies à un taux de conversion d'au moins 95%, préférentiellement d'au moins 98% et plus préférentiellement 100% avant addition de ladite composition de monomères M3.

9. Composition de dispersion aqueuse de polymère, **caractérisée en ce qu'**elle comprend au moins une dispersion aqueuse telle que définie selon l'une des revendications 1 à 6 ou obtenue par le procédé tel que défini selon l'une des revendications 6 à 8.

10. Composition selon la revendication 9, **caractérisée en ce qu'**elle comprend en plus de ladite dispersion au moins une autre dispersion aqueuse de polymère, de préférence avec ladite autre dispersion étant une dispersion de résines ou de polymères choisie parmi : dispersion de polyesters saturés et/ou insaturés, de préférence à base de polyesters insaturés et plus préférentiellement dispersion de résines alkydes modifiées ou non modifiées, dispersion (émulsion) de copolymères acryliques, y compris purement acryliques et styrène-acryliques, dispersion de copolymères vinyliques, dispersion d'oligomères acryliques acrylés, dispersion de polyuréthanes y compris polyuréthanes insaturés, en particulier acrylés, dispersion de résines d'hydrocarbures ou dispersion de résines de colophane y compris esters de colophane ou dispersion de résines modifiées à la colophane, le mélange pouvant être effectué à température de synthèse de l'émulsion acrylique ou à une température inférieure.

11. Composition de revêtement, **caractérisée en ce qu'**elle comprend au moins une dispersion aqueuse telle que définie selon l'une des revendications 1 à 5 ou obtenue par un procédé tel que défini selon l'une des revendications 6 à 8 ou une composition de dispersion telle que définie selon la revendication 9 ou 10.

12. Composition selon la revendication 9 à 11, **caractérisée en ce qu'**elle ne comprend pas d'agent de coalescence.

13. Utilisation d'une dispersion telle que définie selon l'une des revendications 1 à 5 ou obtenue par un procédé tel que défini selon l'une des revendications 6 à 8, en tant que liant organique pour revêtements aqueux.

14. Utilisation selon la revendication 13, **caractérisée en ce qu'**il s'agit de revêtements industriels, en particulier de revêtements de protection et/ou revêtements décoratifs, de préférence choisis parmi : peintures, vernis, lasures, primaires, encres, adhésifs et/ou revêtements de finition (top coats), d'étanchéité, de traitement de verre, de traitement de fibres, en particulier de textile, de traitement de tissus tissés ou non tissés.

15. Utilisation selon la revendication 14, **caractérisée en ce qu'**il s'agit de revêtements de protection, choisis parmi les revêtements de protection mécanique et/ou chimique de substrats, en particulier parmi les substrats : métal, béton, fibrociment, plâtre, bois, carton, plastique, composite, verre, fibres (creuses ou non), textile, tissus tissés ou non tissés (synthétiques ou cellulosiques), cuir.

16. Utilisation selon l'une des revendications 14 à 15, **caractérisée en ce qu'**il s'agit d'utilisation pour revêtements aqueux résistant à la salissure et/ou à l'abrasion humide.

17. Revêtement, en particulier non réticulé, **caractérisé en ce qu'**il résulte de l'utilisation d'au moins une dispersion telle que définie selon l'une des revendications 1 à 5 ou obtenue par un procédé tel que défini selon l'une des revendications 6 à 8 ou de l'utilisation d'une composition de dispersion telle que définie selon l'une des revendications 9 à 12.

18. Revêtement selon la revendication 17, **caractérisé en ce qu'**il n'est pas réticulé.

**Patentansprüche**

1. Wässrige Polymerdispersion aus multistrukturierten Polymerpartikeln (mindestens 3 verschiedene Polymerphasen), **dadurch gekennzeichnet, dass** der Partikel umfasst:

- eine Polymerphase als Kern aus einem Polymer P1, das aus der Emulsionspolymerisation einer Monomerzusammensetzung M1 abgeleitet ist, wobei P1 eine Glasübergangstemperatur Tg1, berechnet nach Fox, von 60 bis 120 °C, vorzugsweise von 60 bis 100 °C aufweist,

- eine zweite Polymerphase, die den Kern umschließt, aus einem Polymer P2, das aus der Emulsionspolymerisation einer Monomerzusammensetzung M2 abgeleitet ist, wobei P2 eine Glasübergangstemperatur Tg2, berechnet nach Fox, von -60 bis 40 °C, vorzugsweise von -30 bis 30 °C aufweist,

- eine dritte äußere Polymerphase (oder Schale), die die Phase P2 umschließt, aus einem Polymer P3, das aus der Emulsionspolymerisation einer Monomerzusammensetzung M3 abgeleitet ist, wobei P3 eine Glasübergangstemperatur Tg3, berechnet nach Fox, aufweist, die zwischen Tg2 -5 °C bis Tg2 +5 °C liegt und wobei Tg3 vorzugsweise gleich Tg2 ± 2 °C ist, und eine zahlenmittlere Molmasse Mn, gemessen mittels sterischer Ausschlusschromatographie mit Polystyrolstandards, von nicht mehr als 150.000, die vorzugsweise zwischen 1.000 und 150.000 liegt, wobei die Gewichtsanteile bezogen auf das Gesamtgewicht von Polymer P1 + P2 + P3, für:

- P1 5 bis 50 %
- P2 40 bis 85 %, vorzugsweise 45 bis 80 %
- P3 5 bis 25 %, vorzugsweise 10 bis 20 % betragen, wobei die Summe der Gewichtsanteile (P1 + P2 + P3) gleich 100 % ist, und

dadurch, dass die Zusammensetzung M3, aus der P3 abgeleitet ist, und gegebenenfalls die Zusammensetzung M2, aus der P2 abgeleitet ist, mindestens ein ethylenisch ungesättigtes Monomer umfassen, das neben seiner ethylenischen Ungesättigtheit mindestens eine funktionelle Gruppe X trägt, ausgewählt aus: Acetoacetoxy, Alkoxysilan, Carboxy/Anhydrid, Hydroxy, Amin, Epoxy (oder Oxiran), Phosphat, Phosphonat, Phosphinat, Sulfat, Sulfonat, Amid, Imidazol, cyclischem Carbonat, Ureido und vorzugsweise aus: Acetoacetoxy, Carboxy/Anhydrid, Hydroxy, Amin, Epoxy (oder Oxiran), Phosphat, Phosphonat, Phosphinat, Sulfat, Sulfonat, Amid, Imidazol, cyclischem Carbonat oder Ureido.

2. Dispersion nach Anspruch 1, **dadurch gekennzeichnet, dass** die Emulsionspolymerisation der Zusammensetzung M1 in Gegenwart von drei anionischen Tensiden, darunter einem anionischen Tensid in einer Impfmonomerzusammensetzung M0 und zwei verschiedenen Tensiden in einer Monomerzusammensetzung M'1, durchgeführt wird, wobei die Gesamtzusammensetzung, die aus M0 und aus M'1 abgeleitet ist, der Monomerzusammensetzung M1 entspricht, und dadurch, dass die Emulsionspolymerisation der Zusammensetzung M2 in Gegenwart von mindestens zwei Tensiden durchgeführt wird, von denen eines nicht ionisch ist, vorzugsweise ausgewählt aus alkoxylierten Fettalkoholen, und wobei das andere anionisch ist und in Bezug auf das eine der zwei oben für M1 definierten Tenside gleich oder verschieden sein kann, und dadurch, dass mindestens eines der anionischen Tenside in M1 und M2 ein mindestens eine Sulfosuccinatgruppe trägt.

3. Dispersion nach Anspruch 1 oder 2, **dadurch gekennzeichnet, dass** die Zusammensetzung M2 und folglich das Polymer P2, das aus M2 abgeleitet ist, mindestens ein wasserlösliches Übertragungsmittel umfasst, dadurch, dass die Zusammensetzung M3 und folglich das Polymer P3, das aus M3 abgeleitet ist, mindestens zwei Übertragungsmittel umfasst, von denen eines wasserlöslich und eines fettlöslich ist, und das Gewichtsverhältnis von wasserlöslichem Übertragungsmittel zu fettlöslichem Übertragungsmittel für alle Phasen P2 und P3 (P2 + P3) kleiner als 10 und vorzugsweise kleiner als 5 ist.

4. Dispersion nach Anspruch 3, **dadurch gekennzeichnet, dass** der Index der Gruppen X, ausgedrückt in mmol/g Polymer (Polymer: P1 + P2 + P3) im Bereich zwischen 0,002 und 0,5, vorzugsweise zwischen 0,005 und 0,5, bevorzugter zwischen 0,1 und 0,5 und noch bevorzugter zwischen 0,02 und 0,5 liegt.

5. Dispersion nach einem der Ansprüche 1 bis 4, **dadurch gekennzeichnet, dass** die Polymere P1, P2 und P3 jeweils aus den Monomerzusammensetzungen M1, M2 und M3 abgeleitet sind, die ausschließlich aus (Meth)acrylmonomeren oder Mischungen von (Meth)acrylmonomeren mit mindestens einem vinylaromatischen Monomer bestehen, wobei Styrol das bevorzugte vinylaromatische Monomer ist, und dass das Polymer P1 aus einer Monomerzusammensetzung M1 abgeleitet ist, die mindestens ein Monomer als internes Vernetzungsmittel umfasst.

6. Verfahren zur Herstellung einer Dispersion nach einem der Ansprüche 1 bis 5, **dadurch gekennzeichnet, dass** das Verfahren die folgenden Schritte zur Emulsionspolymerisation umfasst:

i) einen Impfschritt, umfassend eine Prä-Emulsionspolymerisation einer Impfmonomerzusammensetzung M0, wobei die Impfpartikel eine Größe von kleiner oder gleich 30 nm aufweisen und einen Gewichtsanteil zwischen 2 und 25 Gew.-% und vorzugsweise zwischen 5 und 20 Gew.-% der Polymerphase P1 darstellen,

ii) einen Schritt zur Emulsionspolymerisation einer Monomerzusammensetzung M'1, die ein Polymer P'1 ergibt, das somit mit dem Impfpolymer P0, das in Schritt i) erhalten wurde, die Polymerphase P1 des Partikelkerns bildet, wobei die Monomerzusammensetzung M'1 gleich oder verschieden ist von der Impfzusammensetzung M0 und ihre gewichtsmittlere Gesamtzusammensetzung (M0 + M'1) der der Monomere M1 entspricht, und gegebenenfalls kann das Produkt dieses Schritts ii) (Dispersion) gelagert werden und zu einem späteren Zeitpunkt als Ausgangsmaterial für den folgenden Schritt iii) verwendet werden,

iii) einen Schritt zur Emulsionspolymerisation einer Monomerzusammensetzung M2, die zur Polymerphase P2 führt, wobei der Schritt iii) zu Beginn eine Beimpfung und gegebenenfalls in Gegenwart eines wasserlöslichen Übertragungsmittels,

iv) einen Schritt zur Polymerisation einer Monomerzusammensetzung M3, der zu der Polymerphase P3 führt, um das Polymer P3 als äußere Schicht zu erhalten, gegebenenfalls in Gegenwart von zwei Übertragungsmitteln, vorzugsweise aus Mercaptanen, wobei das eine wasserlöslich und das andere fettlöslich ist.

7. Verfahren nach Anspruch 6, **dadurch gekennzeichnet, dass**:

- der Impfschritt i) in Gegenwart von 0,01 bis 0,5 Gew.-%, vorzugsweise 0,05 bis 0,2 Gew.-% eines anionischen Tensids (100 % TA-Trockenprodukt), bezogen auf das Gesamtgewicht von P1 + P2 + P3, durchgeführt wird,
- der Schritt zur Polymerisation ii) der Monomerzusammensetzung M'1 in Gegenwart von 0,1 bis 3 Gew.-%, vorzugsweise von 0,1 bis 1,5 Gew.-%, bezogen auf das Gesamtgewicht von P1 + P2 + P3, eines ersten anionischen Tensids, das gleich oder verschieden ist von dem der Impfzusammensetzung M0, und einem zweiten anionischen Tensid, das von dem ersten dieses Schritts ii) verschieden ist, durchgeführt wird, wobei der Gewichtsanteil dieser beiden anionischen Tenside der Phase P1 0,1 bis 3 %, vorzugsweise 0,1 bis 1,5 %, bezogen auf das Gesamtgewicht von P1 + P2 + P3, beträgt,
- der Schritt zur Polymerisation iii) der Monomerzusammensetzung M2 in Gegenwart von 0,1 bis 3 Gew.-%, vorzugsweise von 0,2 bis 2,5 Gew.-%, bezogen auf das Gesamtgewicht von P1 + P2 + P3, von mindestens zwei Tensiden a) und b) durchgeführt wird, wobei a) ein erstes nichtionisches Tensid ausgewählt ist aus alkoxylierten Fettalkoholen, vorzugsweise ausgewählt aus alkoxylierten Fettalkoholen, bevorzugter alkoxylierten $C_{12}$- bis $C_{16}$-Fettalkoholen, noch bevorzugter mit Ethoxy- und/oder Propoxyeinheiten, insbesondere Ethoxyeinheiten, als Alkoxyeinheiten, und wobei die Anzahl der Alkoxyeinheiten insbesondere 3 bis 50 und noch bevorzugter 5 bis 40 Ethoxyeinheiten beträgt, und b) ein anionisches Tensid ist, das gleich oder verschieden von denen aus Schritt ii) sein kann, wobei der Schritt iii) zu Beginn eine Beimpfung und gegebenenfalls in Gegenwart mindestens eines wasserlöslichen Übertragungsmittels,
- wobei der Schritt zur Polymerisation iv) der Zusammensetzung M3 in Gegenwart oder Abwesenheit von Tensiden durchgeführt wird, und wenn er in Gegenwart von Tensiden durchgeführt wird, unter den gleichen Bedingungen wie denen aus Schritt iii), und gegebenenfalls in Gegenwart von mindestens zwei Übertragungsmitteln, von denen eines wasserlöslich und eines fettlöslich ist, und dadurch, dass:
- die Schritte i) und ii) bei einer Temperatur von 75 bis 90 °C durchgeführt werden,
- der Schritt zur Polymerisation iii) der Monomerzusammensetzung M2 wie der Schritt zur Polymerisation iv) der Monomerzusammensetzung M3 bei einer Temperatur kleiner der Tg1 durchgeführt wird, wenn das Verfahren bei Atmosphärendruck eingesetzt wird.

8. Verfahren nach Anspruch 6 oder 7, **dadurch gekennzeichnet, dass** Schritt ii) zur Emulsionspolymerisation der Gesamtzusammensetzung M1, die das Polymer P1 ergibt, und der Schritt iii) zur Emulsionspolymerisation der Zusammensetzung M2, die das Polymer P2 ergibt, bei einer Umwandlungsrate von mindestens 95 %, vorzugsweise mindestens 98 % und bevorzugter 100 % fortgesetzt werden, bevor die Monomerzusammensetzung M3 zugegeben wird.

9. Wässrige Polymerdispersionszusammensetzung, **dadurch gekennzeichnet, dass** sie mindestens eine wässrige Dispersion nach einem der Ansprüche 1 bis 5 umfasst oder durch das Verfahren nach einem der Ansprüche 6 bis 8 erhalten wird.

10. Zusammensetzung nach Anspruch 9, **dadurch gekennzeichnet, dass** sie zusätzlich zu der Dispersion mindestens eine andere wässrige Polymerdispersion umfasst, wobei die andere Dispersion vorzugsweise eine Harz- oder Polymerdispersion ist, ausgewählt aus: Dispersion gesättigter und/oder ungesättigter Polyester, vorzugsweise aus ungesättigten Polyestern, und bevorzugter Dispersion von modifizierten oder unmodifizierten Alkydharzen, Dispersion (Emulsion) von Acrylcopolymeren, einschließlich reinen Acryl- und Styrol-Acryl-Copolymeren, Dispersion von Vinylcopolymeren, Dispersion von acrylierten Acryloligomeren, Dispersion von Polyurethanen, einschließlich insbesondere ungesättigter acrylierter Polyurethane, Dispersion von Kohlenwasserstoffharzen oder Dispersion von Kolophoniumharzen, einschließlich Kolophoniumestern, oder Dispersion von modifizierten Kolophoniumharzen, wobei das Mischen bei der Synthesetemperatur der Acrylemulsion oder bei einer niedrigeren Temperatur durchgeführt werden kann.

**11.** Beschichtungszusammensetzung, **dadurch gekennzeichnet, dass** sie mindestens eine wässrige Dispersion nach einem der Ansprüche 1 bis 5 oder erhalten durch ein Verfahren nach einem der Ansprüche 6 bis 8 oder eine Dispersionszusammensetzung nach einem der Ansprüche 9 oder 10 umfasst.

**12.** Zusammensetzung nach Anspruch 9 bis 11, **dadurch gekennzeichnet, dass** sie kein Koaleszenzmittel umfasst.

**13.** Verwendung einer Dispersion nach einem der Ansprüche 1 bis 5 oder erhalten durch ein Verfahren nach einem der Ansprüche 6 bis 8 als organisches Bindemittel für wässrige Beschichtungen.

**14.** Verwendung nach Anspruch 13, **dadurch gekennzeichnet, dass** es sich um industrielle Beschichtungen handelt, insbesondere um Schutzbeschichtungen und/oder dekorative Beschichtungen, vorzugsweise ausgewählt aus: Farben, Lacken, Lasuren, Grundanstrichen, Tinten, Klebstoffen und/oder Deckanstrichen (Topcoats), Dichtanstrichen, zur Glasbehandlung, zur Faser- insbesondere Textilfaserbehandlung, zur Behandlung von Geweben oder Vliesstoffen.

**15.** Verwendung nach Anspruch 14, **dadurch gekennzeichnet, dass** es sich um Schutzbeschichtungen, ausgewählt aus mechanischen und/oder chemischen Schutzbeschichtungen von Substraten, insbesondere aus den Substraten: Metall, Beton, Faserzement, Gips, Holz, Pappe, Kunststoff, Verbundstoff, Glas, Fasern (hohl oder nicht), Textilien, Web- oder Vliesstoffe (synthetisch oder aus Zellulose), Leder, handelt.

**16.** Verwendung nach einem der Ansprüche 14 bis 15, **dadurch gekennzeichnet, dass** es sich um eine Verwendung für wässrige Beschichtungen handelt, die gegen Schmutz und/oder Nassabrieb beständig sind.

**17.** Beschichtung, insbesondere nicht vernetzt, **dadurch gekennzeichnet, dass** sie aus der Verwendung mindestens einer wässrige Dispersion nach einem der Ansprüche 1 bis 5 oder erhalten durch ein Verfahren nach einem der Ansprüche 6 bis 8 oder durch Verwendung einer Dispersionszusammensetzung nach einem der Ansprüche 9 bis 12 resultiert.

**18.** Beschichtung nach Anspruch 17, **dadurch gekennzeichnet, dass** sie nicht vernetzt ist.

**Claims**

**1.** Aqueous dispersion of polymer based on multi-structured polymer particles (at least 3 different polymer phases), **characterized in that** said particle comprises:

- a polymer phase as core, based on a polymer P1 derived from the emulsion polymerization of a monomer composition M1, with P1 having a glass transition temperature Tg1, calculated according to Fox, ranging from 60 to 120°C and preferably from 60 to 100°C,
- a second polymer phase enveloping said core, based on a polymer P2 derived from the emulsion polymerization of a monomer composition M2, with P2 having a glass transition temperature Tg2, calculated according to Fox, ranging from -60 to 40°C and preferably from -30 to 30°C,
- a third outer polymer phase (or shell) enveloping said phase P2, based on a polymer P3 derived from the emulsion polymerization of a monomer composition M3, with P3 having a glass transition temperature Tg3, calculated according to Fox, ranging from Tg2 - 5°C to Tg2 + 5°C and Tg3 preferably being equal to Tg2 $\pm$ 2°C, and a number-average molecular mass Mn, measured by size exclusion chromatography with polystyrene calibration, not exceeding 150 000, preferably ranging from 1000 to 150 000,

with the weight contents relative to the total weight of polymer P1 + P2 + P3 being for:

- P1 from 5% to 50%
- P2 from 40% to 85%, preferably from 45% to 80%
- P3 from 5% to 25%, preferably from 10% to 20% and the sum of said weight contents (P1 + P2 + P3) being equal to 100% and **in that** said composition M3 from which P3 is derived and optionally said composition M2 from which P2 is derived comprise at least one ethylenically unsaturated monomer bearing, in addition to its ethylenic unsaturation, at least one functional group X selected from: acetoacetoxy, alkoxysilane, carboxy/anhydride, hydroxy, amine, epoxy (or oxirane), phosphate, phosphonate, phosphinate, sulfate, sulfonate, amide, imidazole, cyclic carbonate, ureido, and preferably from: acetoacetoxy, carboxy/anhydride, hydroxy, amine, epoxy (or oxirane), phosphate, phosphonate, phosphinate, sulfate, sulfonate, amide, imidazole, cyclic carbonate or ureido.

2. Dispersion according to Claim 1, **characterized in that** said emulsion polymerization of said composition M1 is performed in the presence of three anionic surfactants, of which anionic surfactant in a seed monomer composition M0 and two different surfactants in a monomer composition M'1 with the overall composition derived from M0 and M'1 corresponding to said monomer composition M1 and **in that** said emulsion polymerization of said composition M2 is performed in the presence of at least two surfactants, one of which is nonionic, preferably chosen from alkoxylated fatty alcohols, and the other being anionic and possibly being identical or different relative to one of the two surfactants defined above for M1 and **in that** at least one of said anionic surfactants in M1 and M2 bears at least one sulfosuccinate group.

3. Dispersion according to Claim 1 or 2, **characterized in that** said composition M2 and consequently said polymer P2 derived from M2 comprise at least one water-soluble transfer agent, **in that** said composition M3 and consequently said polymer P3 derived from M3 comprise at least two transfer agents, of which one is water-soluble and one is liposoluble and the weight ratio of water-soluble transfer agent to liposoluble transfer agent for all the phases P2 and P3 (P2 + P3) is less than 10 and preferably less than 5.

4. Dispersion according to Claim 3, **characterized in that** the index of groups X expressed in mmol/g of polymer (polymer: P1 + P2 + P3) ranges from 0.002 to 0.5, preferably from 0.005 to 0.5, more preferentially from 0.1 to 0.5 and even more preferentially from 0.02 to 0.5.

5. Dispersion according to one of Claims 1 to 4, **characterized in that** said polymers P1, P2 and P3 are derived, respectively, from said monomer compositions M1, M2 and M3, constituted exclusively of (meth)acrylic monomers or of mixtures of (meth)acrylic monomers with at least one vinyl aromatic monomer, styrene being the preferred vinyl aromatic monomer and that said polymer P1 is derived from a monomer composition M1 comprising at least one monomer as internal crosslinking agent.

6. Process for preparing a dispersion as defined in one of Claims 1 to 5, **characterized in that** said process comprises the following emulsion polymerization steps:

   i) a seeding step comprising an emulsion prepolymerization of a seed monomer composition M0, with the seed particles having a size of less than or equal to 30 nm and representing a weight content ranging from 2% to 25% and preferably from 5% to 20% of the weight of said polymer phase P1

   ii) a step of emulsion polymerization of a monomer composition M'1 giving a polymer P'1, thus constituting with the seed polymer P0 obtained in step i) said polymer phase P1 of said particle core, said monomer composition M'1 being identical to or different from said seed composition M0 and their overall weight-average composition (M0 + M'1) corresponding to that of said monomers M1, the product of this step ii) (dispersion) optionally being able to be stored and used at a later time, as starting material for the following step iii)

   iii) a step of emulsion polymerization of a monomer composition M2 giving rise to said polymer phase P2, said step iii) comprising at the start a seeding and optionally in the presence of a water-soluble transfer agent,

   iv) a step of polymerization of a monomer composition M3 giving rise to said polymer phase P3, so as to obtain said polymer P3 as an outer layer, optionally in the presence of two transfer agents, preferably from among mercaptans, one being water-soluble and the other liposoluble.

7. Process according to Claim 6, **characterized in that**:

   - the seeding step i) is performed in the presence of from 0.01% to 0.5% and preferably from 0.05% to 0.2% by weight of said anionic surfactant (anionic surfactant product 100% dry) relative to the total weight of P1 + P2 + P3

   - the step of polymerization ii) of the monomer composition M'1 is performed in the presence of from 0.1% to 3% and preferably from 0.1% to 1.5% by weight, relative to the total weight of P1 + P2 + P3, of a first anionic surfactant which is identical to or different from that of the seed M0, and of a second anionic surfactant different from the first of this step ii), with the weight content of these two anionic surfactants of phase P1 being from 0.1% to 3% and preferably from 0.1% to 1.5% relative to the total weight of P1 + P2 + P3

- the step of polymerization iii) of the monomer composition M2 is performed in the presence of from 0.1% to 3% and preferably from 0.2% to 2.5% by weight, relative to the total weight of P1 + P2 + P3, of at least two surfactants a) and b) with a) being a first nonionic surfactant chosen from alkoxylated fatty alcohols, preferably chosen from alkoxylated fatty alcohols, more preferentially alkoxylated $C_{12}$ to $C_{16}$ fatty alcohols, even more preferentially with ethoxy and/or propoxy as alkoxy units, in particular ethoxy units and more particularly with the number of said alkoxy units being from 3 to 50 and even more particularly from 5 to 40 ethoxy units and b) being an anionic surfactant which may be identical to or different from those of step ii), with said step iii) comprising at the start a seeding, and optionally in the presence of at least one water-soluble transfer agent,

- the step of polymerization iv) of said composition M3 is performed in the presence or absence of surfactants and if performed in the presence of surfactants, in this case under the same conditions as those of step iii) and optionally in the presence of at least two transfer agents, of which one is water-soluble and one is liposoluble and **in that**:

- steps i) and ii) are performed at a temperature of from 75 to 90°C

- the step of polymerization iii) of said monomer composition M2, like the step of polymerization iv) of said monomer composition M3, is performed at a temperature below Tg1, when said process is performed at atmospheric pressure.

8. Process according to Claim 6 or 7, **characterized in that** step ii) of emulsion polymerization of the overall composition M1, giving the polymer P1, and step iii) of emulsion polymerization of said composition M2, giving the polymer P2, are continued to a degree of conversion of at least 95%, preferentially at least 98% and more preferentially 100% before addition of said monomer composition M3.

9. Aqueous polymer dispersion composition, **characterized in that** it comprises at least one aqueous dispersion as defined in one of Claims 1 to 5 or obtained via the process as defined in one of Claims 6 to 8.

10. Composition according to Claim 9, **characterized in that** it comprises, in addition to said dispersion, at least one other aqueous polymer dispersion, preferably with said other dispersion being a dispersion of resins or of polymers chosen from: dispersion of saturated and/or unsaturated polyesters, preferably based on unsaturated polyesters and more preferentially dispersion of modified or unmodified alkyd resins, dispersion (emulsion) of acrylic copolymers, including purely acrylic and styrene-acrylic copolymers, dispersion of vinyl copolymers, dispersion of acryl acrylic oligomers, dispersion of polyurethanes including unsaturated polyurethanes, in particular acryl polyurethanes, dispersion of hydrocarbon resins or dispersion of colophony resins including colophony esters or dispersion of colophony-modified resins, the mixing possibly being performed at the synthesis temperature of the acrylic emulsion or at a lower temperature.

11. Coating composition, **characterized in that** it comprises at least one aqueous dispersion as defined in one of Claims 1 to 5 or obtained via a process as defined in one of Claims 6 to 8, or a dispersion composition as defined in Claims 9 or 10.

12. Composition according to Claims 9 to 11, **characterized in that** it does not comprise any coalescer.

13. Use of a dispersion as defined in one of Claims 1 to 5 or obtained via a process as defined in one of Claims 6 to 8, as an organic binder for aqueous coatings.

14. Use according to Claim 13, **characterized in that** it concerns industrial coatings, in particular protective coatings and/or decorative coatings, preferably chosen from: paints, varnishes, lacquers, primers, inks, adhesives and/or top coats, and coatings for leakproofing, for treating glass, for treating fibers, in particular textile, or for treating wovens or nonwovens.

15. Use according to Claim 14, **characterized in that** it concerns protective coatings chosen from coatings for mechanical and/or chemical protection of substrates, in particular from the following substrates: metal, concrete, fiber cement, plaster, wood, cardboard, plastic, composite, glass, fibers (hollow or filled), textile, woven or nonwoven fabrics (which may be synthetic or cellulose-based fabrics), and leather.

16. Use according to either of Claims 14 and 15, **characterized in that** it concerns use for aqueous coatings that are resistant to soiling and/or to wet abrasion.

17. Coating, in particular a non-crosslinked coating, **characterized in that** it results from the use of at least one dispersion as defined in one of Claims 1 to 5 or obtained via a process as defined in one of Claims 6 to 8, or from the use of a dispersion composition as defined in one of Claims 9 to 12.

18. Coating according to Claim 17, **characterized in that** it is not crosslinked.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011009560 A
- WO 2008028062 A
- US 20110218291 A
- WO 2012042153 A

**Littérature non-brevet citée dans la description**

- **W. M. MEYLAN ; P.H. HOWARD.** Atom/fragment contribution method for estimating octanol-water partition coefficients. *Pharm. Sci.,* 1995, vol. 84, 83-92